Europäisches Patentamt

European Patent Office

Office européen des brevets

(11) Publication number: **0 360 300**
A1

## (12) EUROPEAN PATENT APPLICATION

(21) Application number: 89120609.6

(22) Date of filing: 30.05.84

(51) Int. Cl.⁵: **C08F 118/08** , **C08F 8/12** , **G02B 1/04**

(30) Priority: 03.06.83 US 500785

(43) Date of publication of application:
28.03.90 Bulletin 90/13

(60) Publication number of the earlier application in accordance with Art.76 EPC: 0 128 004

(84) Designated Contracting States:
AT BE CH DE FR GB IT LI NL SE

(71) Applicant: MINNESOTA MINING AND MANUFACTURING COMPANY
3M Center, P.O. Box 33427
Saint Paul, MN 55133- 3427(US)

(72) Inventor: Ofstead, Ronald F. c/o Minnesota Mining and
Manufacturing Company 2501 Hudson Road
St. Paul Minnesota 55133(US)

(74) Representative: Baillie, Iain Cameron et al
c/o Ladas & Parry Isartorplatz 5
D-8000 München 2(DE)

(54) Process for producing shaped article composed of solvolyzed poly(vinyl trifluoroacetate).

(57) Shaped articles composed of solvolyzed polymers of vinyl trifluoroacetate (VTA) are disclosed which are produced by solvolysis with a mild base. The solvolyzed polymer articles can be contacted with water to form hydrogel articles, particularly ocular devices.

EP 0 360 300 A1

# PROCESS FOR PRODUCING SHAPED ARTICLE COMPOSED OF SOLVOLYZED POLY(VINYL TRIFLUOROACETATE)

## Field of the Invention

This invention relates to the use of non-crosslinked polymers of poly(vinyl trifluoroacetate) to form novel polymers by solvolysis. Hydrogel ocular devices can be formed from the poly(vinyl alcohol) copolymers of the invention.

## Background of the Invention

Reference is made to European Patent Application No. 84303635 (which relates to copolymers of poly-(vinyl trifluoroacetate) with vinyl esters, vinyl ethers and disubstituted ethylenes) from which the present application is divided.

In order to provide shaped articles having hydrogel properties from hydroxyl-containing monomers, the articles also possessing adequate strength and structural integrity, two processes are used in the art. One process requires forming a cross-linked polymer, cutting and machining the cross-linked polymer into the desired shape and configuration and then hydrating the article to provide a hydrogen article. This process utilizes labor-intensive cutting, machining, polishing, and the like. The other process, called spin casting is described, for example, in U.S. Patent No. 3,408,429 and requires that polymerization in the presence of a crosslinking agent be carried out in a rotating mold which approximates the shape of the desired article. After polymerization the article is further processed if necessary to attain the final shape. The shaped article is then hydrated to provide a hydrogel article.

An early attempt to hydrolyze vinyl trifluoroacetate polymers is disclosed in U.S. Patent No. 2,436,144 (see Example VIII). It is taught in the patent that the polymer obtained by hydrolysis is soluble in water, i.e., it is not a hydrogel. The polymers of poly(vinyl trifluoroacetate) obtained are described as colorless, transparent, tough and thermoplastic (col. 3, 11. 25-31). Further, the patent discloses molded articles of poly(vinyl trifluoroacetate) having softening temperatures of 70° C. Thus, the poly(vinyl trifluoroacetate) and its hydrolysis product of this patent are significantly different from that of the present invention.

The invention provides a process for preparing a shaped article comprising the steps:

    a. preparing a poly(vinyl trifluoroacetate) homopolymer from vinyl trifluoroacetate monomer,

    b. thermoforming said homopolymer to provide a shaped article, and

    c. solvolyzing the shaped thermoformed article with a mild base.

Preferably the shaped solvolyzed article is contacted with water to form a hydrogel article.

Preferably the shaped article is formed into an ocular device.

Trihaloacetate-protected polymers are thermoplastic polymeric precursors to uncross-linked hydrogel polymers, and a solvolytic process followed by hydration transforms the molded precursor polymer into a shaped hydrogel polymer. Both strength and water sorbency in the absence of covalent cross-linking may be provided in certain examples by creating semicrystalline polymer hydrogels. These polymer hydrogels are suited for use as ocular devices because they have extraordinarily high strength, flexibility, transparency, and are capable of absorbing large amounts of water which give high rates of oxygen permeability needed for corneal health.

It has been discovered, surprisingly, that the polymeric compositions of this invention provide thermoplastic copolymeric precursors to hydrogels which can be thermoprocessed to molded lens articles, then solvolyzed and subsequently hydrated to provide a molded hydrogel lens with high and controllable water sorbency characteristics.

It has not previously been recognized that the novel process of the present invention can provide articles with improved water absorption and in some instances improved strength even when compared to heavily cross-linked hydrogel polymers. The present process avoids both of the factors which can prevent thermal processability, i.e., hydrogen bonding by hydroxyl functional groups and cross-linking.

The present invention provides shaped hydrogels without using the step of machining or cutting a tough polymer, and thus provides a significant advantage in hydrogel processing.

The approach, materials, and processes described below are believed to represent a novel solution to achieving superior ocular devices giving a desirable and surprising combination of properties.

As used in the present application:

"ocular device" means a corneal transplant, corneal implant or contact lens;

"solvolysis" means the reaction of an ester group capable of cleaving into a carboxyl-containing compound (e.g., amide, ester, or acid) and an alcohol in the presence of a nucleophile such as water (at room temperature), ammonium hydroxide or an organic amine or in the presence of a lower ($C_1$ to $C_4$) alkanol (at temperatures up to 60°C) in one hour or less;

"thermoformable (thermoprocessable) polymer" means a polymer which may be heated to a temperature in the range of 150 to 300°C, and preferably at about 200°C, and most preferably from 10 to 20°C above the crystalline melting point ($T_m$) of the poly(vinyl trifluoroacetate) copolymer, maintained at that temperature for 5 sec. to 15 min. and then cooled to provide a shaped article of the polymer which will retain its shape under ambient conditions;

"ambient conditions" means room temperature and pressure;

"hydrogel" means a material which absorbs water in the range of 10 to 95 percent by weight, without itself dissolving;

"high tensile strength" means having a tensile strength greater than 6.9 kg/cm$^2$ (100 psi); and

"contact lens button" means a cylindrical-shaped article which is machinable into a contact lens.


Detailed Description

The process for the preparation of polymers of vinyl trifluoroacetate is preferably a bulk polymerization process carried out in a conventional manner induced, for example, by relatively mild heating or irradiation in the presence of a free-radical initiator in a relatively inert atmosphere, e.g., in a sealed ampoule or other container after degassing.

Included among free-radical initiators are the conventional thermally activated initiators such as organic peroxides, hydroperoxides, and azo compounds. Representative examples of such initiators include benzoyl peroxide, tertiary-butyl perbenzoate, diisopropyl peroxydicarbonate, cumene hydroperoxide, azobis-(isobutyronitrile), methyl tricapryl ammonium persulfate, and diacyl peroxides such as decanoyl peroxide and the like. Generally, from about 0.05 to 5 percent by weight of a thermal initiator is used. These thermally activated initiators are preferred.

Photoinitiators may also be employed to initiate polymerization. Such initiators are well known and have been described, for example, in polymerization art, e.g., Chapter II of "Photochemistry" by Calvert and Pitts, John Wiley and Sons (1966). The preferred initiators are photoinitiators which facilitate polymerization when the composition is irradiated. Representative examples of such initiators include acyloin and derivatives thereof, such as benzoin, benzoin methyl ether, benzoin ethyl ether, benzoin isopropyl ether, benzoin isobutyl ether, and α-methyl-benzoin; diketones such as benzil and diacetyl, etc.; ketones such as acetophenone, α,α,α-trichloroacetophenone α,α,α-tribromoacetophenone, α,α-diethoxyacetophenone, (DEAP), 2-hydroxy-2-methyl-1-phenyl-1-propanone, o-nitro-α,α,α-tribromoacetophenone, benzophenone and p,p'-tetramethyldiaminobenzophenone; α-acyloxime esters such as benzil-(O-ethoxycarbonyl)-α-monoxime; ketone/amine combinations such as benzophenone/N-methyldiethanolamine, benzophenone/tributylamine, and benzophenone/Michler's ketone; and benzilketals such as benzildiethylketal and 2,5-dichlorobenzildimethylketal. Normally, the photoinitiator is used in amounts ranging from about 0.01 to 5 percent by weight of the total monomeric composition. When the quantity is less than 0.01 percent by weight, the photopolymerization rate becomes extremely slow. If the photoinitiator is used in excess of 5 percent by weight, no correspondingly improved effect is observed. Preferably, about 0.05 to 1.0 percent of photoinitiator is used in the polymerizable compositions.

When the activating energy is ultraviolet light, the irradiation is typically carried out at a temperature of about 0 to 50°C for 30 seconds to 5 hours or more. Following ultraviolet irradiation, the composition may be heated at 50 to 100°C to complete the polymerization, provided the free-radical initiator is thermally activatable.

Heating to effect polymerization is generally at 20 to 100°C, and preferably at 30 to 70°C. The precise temperature range depends somewhat on the temperature necessary to activate the free-radical initiator. For example, when azobisisobutyronitrile is used as the initiator the temperature is preferably about 45 to 50°C.

The actual polymerization reaction may be run by combining the vinyl trifluoroacetate, and the initiator in a glass ampoule, freezing the reactants with a cold bath such as liquid nitrogen, degassing the ampoule by use of vacuum, and then sealing it. Heating the ampoule, e.g., in a constant temperature bath provides the heat necessary for the initiation of the polymerization reaction. Irradiation generally uses an ultraviolet lamp.

The reaction time is generally several hours, and has conveniently been carried out overnight, i.e., for about 12 to 20 hours, to provide essentially complete conversion of the monomers to copolymers.

Vinyl trifluoroacetate is preferably purified i.e., trace amounts of acetaldehyde, trifluoroacetic anhydride and trifluoroacetic acid are removed from the vinyl trifluoroacetate for best results.

In the present invention the molecular weights of the preferred embodiments generally are characterized by having a polydispersity (P) of less than 2.0. This indicates a relatively narrow molecular weight distribution. P is a generally recognized measurement of the overall sharpness or breadth of the range of the molecular weights of polymer chains and is equal to

$$\frac{\text{weight average molecular weight}}{\text{number average molecular weight}}.$$

Once the shaped polymeric article has been thermoformed it is optionally, and in most cases preferably, hydrolyzed or solvolyzed to provide a shaped article of different chemical composition. The hydrolysis or solvolysis reaction is carried out under relatively mild conditions (i.e., less than 60°C) using a nucleophile capable of displacing the trihaloacetyl group from the polymer. The nucleophile used is preferably a mild base, such as methanolic ammonium hydroxide or an organic amine (such as di-n-butylamine, morpholine or diethylamine). Ammonium hydroxide is the preferred nucleophilic reagent for the solvolysis step of this process. The base chosen will regulate the ionic character of the polymer when the polymer contains a carboxylic comonomer such as maleic anhydride.

The solvolysis reaction is desirably carried out in a diluent which is not a solvent for the trihaloacetylated polymer, for example a diluent such as water, a lower alkanol, e.g., ethanol or methanol, an ether e.g., diethyl ether or tetrahydrofuran, and the like.

The reaction time may be monitored analytically, e.g., chromatographically to determine both rate and completion of reaction. The solvolysis is preferably complete, and it is very rapid. For example, using 9:1 methanol:ammonium hydroxide as the solvolysis reagent, solvolysis is essentially complete in 15 minutes for most of the polymeric articles.

In addition to hydrogel contact lenses (soft lenses), corneal transplants, corneal implants, molded tubes, e.g., as vascular prostheses and hydrogel coatings, may be prepared by the process of this invention.

In addition, articles of the invention may be prepared by any type of molding, casting, vacuum forming, or extrusion process known in the art. For example, hydrogel films or sheets of these copolymers can be prepared by solvent casting a sample of dissolved polymer into a thin film, drying to evaporate the solvent, treating the film for a relatively short time with a solvolysis reagent and then placing the sample in water. The product is the desired hydrogel of poly(vinyl alcohol) copolymer. While various solvents for solvent casting may be used, solvents such as acetone, ethyl acetate or acetonitrile are preferred since their relatively high volatility permits an essentially complete removal from cast films.

Injection molding is an alternative method of molding which is useful to prepare shaped articles from the copolymers of the present invention.

Objects and advantages of this invention are further illustrated by the following examples, but the particular materials and amounts thereof recited in these examples, as well as other conditions and details, should not be construed to unduly limit this invention.

Examples 1 and 2 (insofar as they relate to copolymers of vinyl trifluoroacetate) are outside the scope of the present invention.

EXAMPLE 1

A mixture of 5 g of vinyl trifluoroacetate, 0.030 g of maleic anhydride and 0.025 g of azobisisobutyronitrile was placed in an ampoule, the contents of which were then frozen with liquid nitrogen. The ampoule was then degassed under a vacuum and sealed. The ampoule was heated in a bath at about 47°C for about 16 hours. The contents of the ampoule were found to be white solid poly(vinyl trifluoroacetate-maleic anhydride) copolymer. The nuclear magnetic resonance spectrum of the copolymer was consistent with the assigned structure.

EXAMPLE 2

One gram of the product of EXAMPLE 1 was pressed between two polyester sheets at 191°C for about 45 seconds. After cooling the polymer film was placed in a flask and about 20 ml of 10 weight percent concentrated ammonium hydroxide in methanol was added. After standing for 15 minutes, the polymer was separated by decanting the liquids, then dried in air to provide a copolymer of vinyl alcohol and maleic anhydride solvolyzed by ammonium hydroxide. The copolymer was found to form a hydrogel when water was added. Water absorption provided a clear, strong elastic film without dissolving the polymer sample.

EXAMPLE 3

TABLE I shows the percentage of water absorbed, estimated gas phase oxygen permeability and various measures of strength for a vinyl trifluoroacetate polymer prepared according to the method of EXAMPLE 1 and solvolyzed according to the method of EXAMPLE 2.

EP 0 360 300 A1

TABLE V

| Sample | Polymer (% is by weight) | Weight percent water absorbed | Oxygen permeability | Tensile strength $(kg/cm^2)$ | Modulus $(kg/cm^2)$ | Percent elongation |
|---|---|---|---|---|---|---|
| | Variation of Properties of Polyvinyl Alcohol-Maleic Anhydride Copolymers | | | | | |
| a | Polyvinyl alcohol; 0% maleic anhydride | 41 | 5.4 | 162 | 115 | 750 |
| b | Commercially available lens | 55 | 12 | 1.6 | 3.2 | 110 |

*The opthalmic devices of the present invention preferably exhibit an oxygen permeability (pO₂) of at least 10 Barrers when measured in accordance with the polarographic oxygen electrode method described by M. F. Refojo et al, "Permeability of Dissolved Oxygen Through Contact Lenses - 1. Cellulose Acetate Butyrate", Cont. Intraocular Lens Med. J. 3(4), 27 (1977). More preferably the devices of the invention exhibit an oxygen permeability of at least 20 Barrers.

The estimated pO₂ was determined by the method of Refojo referenced above. The units are $10^{-11}$ ml of $O_2 \cdot cm/sec \cdot cm^2 \cdot mmHg$.

## Claims

1. A process for preparing a shaped article comprising the steps:
   a. preparing a poly(vinyl trifluoroacetate) homopolymer from vinyl trifluoroacetate monomer,
   b. thermoforming said homopolymer to provide a shaped article, and
   c. solvolyzing the shaped thermoformed article with a mild base.

2. A process as claimed in claim 1 wherein the shaped solvolyzed article is contacted with water to form a hydrogel article.

3. A process as claimed in claim 2 wherein said shaped article is formed into an ocular device.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 388 199  (D.W. CHANEY) <br> * Claims 1,5,9 * <br> --- | 1 | C 08 F 118/08 <br> C 08 F   8/12 <br> G 02 B   1/04 |
| A,D | US-A-2 436 144  (B.W. HOWK) <br> * Claim 2 * <br> ----- | 1 | |

**TECHNICAL FIELDS SEARCHED (Int. Cl.5)**

C 08 F
G 02 B

The present search report has been drawn up for all claims

| Place of search | Date of completion of the search | Examiner |
|---|---|---|
| THE HAGUE | 12-12-1989 | DEPIJPER R.D.C. |